(19) Europäisches Patentamt / European Patent Office / Office européen des brevets

(11) **EP 2 002 436 B1**

(12) **FASCICULE DE BREVET EUROPEEN**

(45) Date de publication et mention
de la délivrance du brevet:
**11.11.2009 Bulletin 2009/46**

(21) Numéro de dépôt: **07727640.0**

(22) Date de dépôt: **02.04.2007**

(51) Int Cl.:
***G11B 7/135*** *(2006.01)*

(86) Numéro de dépôt international:
**PCT/EP2007/053168**

(87) Numéro de publication internationale:
**WO 2007/113281 (11.10.2007 Gazette 2007/41)**

(54) **LENTILLE A IMMERSION SOLIDE A CAPACITE DE FOCALISATION ACCRUE.**

FESTKÖRPERIMMERSIONSLINSE MIT ERHÖHTEM FOKUSSIERUNGSVERMÖGEN

SOLID IMMERSION LENS WITH INCREASED FOCUSING CAPACITY

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **04.04.2006 FR 0651193**

(43) Date de publication de la demande:
**17.12.2008 Bulletin 2008/51**

(73) Titulaire: **Commissariat à l'Energie Atomique
75015 Paris (FR)**

(72) Inventeur: **MIMOUNI, Salim
F-38000 Grenoble (FR)**

(74) Mandataire: **Ilgart, Jean-Christophe
BREVALEX
3, rue du Docteur Lancereaux
75008 Paris (FR)**

(56) Documents cités:
**WO-A-02/41309          WO-A1-00/23840
US-A- 5 125 750        US-A1- 2004 203 257
US-B1- 6 633 439**

**Description**

## DOMAINE TECHNIQUE

La présente invention concerne une lentille à immersion solide (connue comme les brevets WO 02/41 309 A1 et US 6 633 439 B1, sous l'abréviation anglosaxonne de SIL) à capacité de focalisation accrue. Une telle lentille est particulièrement intéressante dans le domaine de l'enregistrement et/ou la lecture et/ou la reproduction d'informations sur un support d'enregistrement optique destiné à stocker les informations. D'autres applications pour cette lentille sont possibles telles que la microscopie ou la lithographie. De telles lentilles sont placées en aval de l'objectif de focalisation de l'appareil de lecture et/ou d'enregistrement et/ou de reproduction d'informations optiques, du microscope ou de l'appareil de lithographie.

## ÉTAT DE LA TECHNIQUE ANTÉRIEURE

Les lentilles classiques sont définies par les constructeurs par trois paramètres dont deux sont les rayons de courbure de leurs dioptres d'entrée et de sortie et dont le troisième est l'indice du matériau qui les constituent. Ces paramètres définissent les caractéristiques paraxiales de la lentilles telle sa distance focale. Dans le cadre d'une conjugaison image objet à distances finies, ces lentilles classiques fonctionnent avec une bonne capacité de focalisation pour des rayons incidents à faibles inclinaisons. Dès que l'inclinaison des rayons incidents augmente, elles se révèlent imparfaites, les rayons à forte inclinaison ne se focalisent pas au même point que ceux à faible inclinaison. Pour y remédier, on introduit à leur surface des corrections ponctuelles appelées asphérisations.
Dans le cadre des lentilles à immersion solide, on travaille en principe avec des ouvertures numériques importantes et les lentilles utilisées doivent être aussi parfaites que possible quelle que soit l'inclinaison du rayon incident. On rappelle que l'expression « immersion solide » signifie que le foyer image où s'effectue la focalisation se trouve soit à l'intérieur de la lentille soit au niveau de l'interface de sortie ou même en aval de la lentille dans un voisinage champ proche de l'interface de sortie, c'est-à-dire dans un rayon égal à la longueur d'onde de travail divisé par 2n. De plus, dans de telles lentilles, seul un des dioptres est réellement utilisé, il s'agit de celui qui se trouve du côté de l'objectif de focalisation qui est destiné à coopérer avec une telle lentille. Par la suite, ce dioptre sera qualifié de dioptre utile. Une telle configuration permet d'obtenir une conjugaison aussi parfaite que possible entre un foyer objet virtuel et le foyer image réel, indépendamment de défauts éventuels induits par des décentrements ou des désalignements. Ces lentilles à immersion solide sont par définition des imageurs aussi parfaits que possible. Par contre, en particulier dans les applications citées plus haut, on cherche à améliorer leur capacité de focalisation. On va prendre pour exemple le domaine de l'enregistrement et/ou de la lecture d'informations sur un support d'enregistrement optique pour expliquer les améliorations recherchées pour de telles lentilles à immersion solide.
Récemment une demande croissante en capacité de stockage des disques optiques est intervenue et a posé la problématique de l'augmentation de la densité des données sur le support d'enregistrement optique puisque l'augmentation de la dimension du support d'enregistrement optique n'est pas envisageable. Une réponse directe à ce problème est de réduire la taille de la tache lumineuse (ou spot) faite par le faisceau laser sur le support d'enregistrement optique. Il est connu qu'une tête de lecture et/ou d'enregistrement avec uniquement un objectif de focalisation ayant une ouverture numérique NA sans aberration réalise une focalisation du faisceau laser, de longueur d'onde $\lambda$, limitée par la diffraction. La taille d du spot ne dépend que de la longueur d'onde et de l'ouverture numérique NA de l'objectif. La relation approximative qui lie ces grandeurs est :

$$d \approx 1{,}22\ \lambda/NA \qquad\qquad (1)$$

Dans une telle formule, une réduction de la longueur d'onde $\lambda$ et/ou une augmentation de l'ouverture numérique NA permettent de diminuer la taille du spot d et donc d'augmenter la densité d'enregistrement sur le support d'enregistrement optique.
Il est connu également que l'introduction d'une lentille à immersion solide dans la tête de lecture et/ou d'enregistrement accroît l'ouverture numérique dé la manière suivante :

$$NA = n1.\ \sin(\alpha_m) \qquad\qquad (2)$$

avec n1 indice de réfraction du matériau constituant la lentille à immersion solide, $\alpha_m$ angle entre l'axe optique de la lentille et le rayon marginal. Ces deux paramètres permettent de caractériser la puissance de focalisation de la lentille à immersion solide.

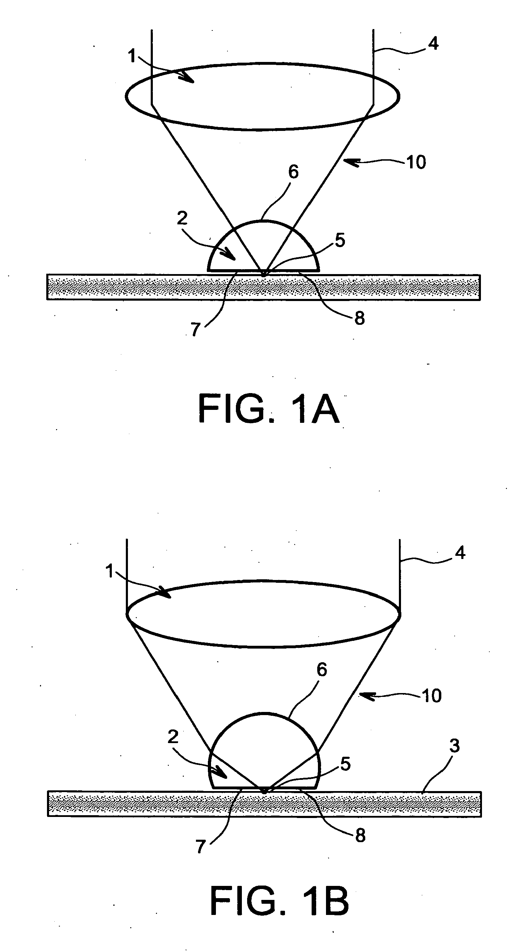

On va se référer aux figures 1A, 1B qui illustrent deux configurations de lentilles à immersion solide conventionnelles.

La lentille de la figure 1A est décrite dans le brevet US-A-5 125 750.

Sur ces figures 1A, 1B, on a représenté une tête optique 10 qui dans cet exemple est une tête de lecture et/ou d'enregistrement et elle est placée à proximité d'un support d'enregistrement optique 3. La tête optique 10 comporte en cascade un objectif de focalisation 1 (schématisé par une lentille) et une lentille à immersion solide 2. La lentille à immersion solide 2 est intercalée entre l'objectif 1 et le support d'enregistrement optique 3. Un faisceau optique 4 a été dessiné, il émerge de la tête dé lecture et/ou d'enregistrement 10, il a traversé l'objectif 1 puis la lentille à immersion solide 2 en se focalisant et il forme un spot 5 sur le support d'enregistrement optique 3. Un espace d'air 8 est aménagé entre la lentille à immersion solide 2 et le support d'enregistrement optique 3. La tête de lecture et/ou d'enregistrement 10 peut ainsi survoler le support d'enregistrement optique 3 sans venir en contact avec lui lorsqu'il se déplace.

Sur la figure 1A, le dioptre utile 6 de la lentille à immersion solide 2, se trouve à l'opposé du support d'enregistrement optique 3, du côté de l'objectif de focalisation 1. Il est hémisphérique. L'autre dioptre 7 qui se trouve du côté du support d'enregistrement optique 3 est plan. Sur la figure 1A, l'ouverture numérique de la tête de lecture et/ou d'enregistrement 10 est n1 fois plus importante que celle de l'objectif 1 seul à cause de la présence de la lentille à immersion solide 2 hémisphérique, n1 représentant l'indice de réfraction du matériau de la lentille à immersion solide 2. L'inclinaison des rayons du faisceau optique 4 n'est pas altérée par la réfraction dans la lentille à immersion solide 4 dans cette configuration appelée hémisphérique. Il se produit une conjugaison du centre de la sphère avec lui-même. La taille du spot est réduite d'un facteur n1 par rapport à celle qu'elle serait en l'absence de la lentille à immersion solide hémisphérique.

Sur la figure 1B, la lentille à immersion solide 2 est plus performante en terme de puissance de focalisation. Le dioptre utile 6 de la lentille à immersion solide 2 situé face à l'objectif de focalisation 1 de la tête de lecture et/ou d'enregistrement 10 est maintenant une sphère tronquée d'épaisseur supérieure au rayon de la sphère. Cette lentille à immersion solide est dénommée lentille super-sphérique. L'inclinaison des rayons du faisceau optique 4 est modifiée lors de la traversée de la lentille à immersion solide. Il se produit une convergence supplémentaire par rapport à celle générée par l'objectif de focalisation 1. Il se produit une conjugaison rigoureusement stigmatique entre les points d'Young-Weierstrass. Ce couple de points est unique, lorsque l'indice de réfraction n1 de la lentille et celui du milieu environnant n2 sont fixés ainsi que le rayon de la sphère. La lentille peut être dans l'air et n2=1. L'ouverture numérique de la tête de lecture et/ou d'enregistrement 10 est $n1^2$ fois plus importante que celle de l'objectif de focalisation 1 seul à cause de la présence de la lentille à immersion solide 2 super-sphérique. La taille du spot est réduite d'un facteur $n1^2$ par rapport à celle qu'elle serait en l'absence de la lentille à immersion solide super-sphérique.

En utilisant de telles lentilles à immersion solide appelées lentilles stigmatiques à dioptre sphérique, il est possible de réaliser des têtes de lecture et/ou d'enregistrement 10 ayant une ouverture numérique supérieure à 1. L'épaisseur de l'espace d'air 8 entre la lentille à immersion solide 2 et le support d'enregistrement optique 3 doit être maintenu aussi faible que possible pour conserver un spot 5 aussi réduit que possible. En effet, le tronçon du faisceau optique 4 d'ouverture supérieure à un, c'est dire situé entre la lentille à immersion solide 2 et le support d'enregistrement optique 3 participe de manière active à la formation du spot 5 limité par la diffraction. Or la réflectivité de ce tronçon de faisceau optique augmente lorsque l'espace d'air 8 augmente. Le brevet US-A-5 125 750 enseigne une méthode de contrôle continu de l'espace entre la lentille à immersion solide et le support d'enregistrement optique à moins de 100 nanomètres voire même moins de 50 nanomètres dans le meilleur des cas.

## EXPOSÉ DE L'INVENTION

La présente invention a pour but de proposer une lentille à immersion solide ne présentant pas les limitations et difficultés ci-dessus, c'est-à-dire ayant une capacité de focalisation accrue.

Un autre but de l'invention est de proposer une lentille à immersion solide qui permette de réduire encore plus la taille du spot et plus généralement la dimension transversale maximale d'un faisceau optique qui émerge d'elle lorsqu'elle est utilisée dans une tête optique en aval d'un objectif de focalisation.

Pour atteindre ces buts l'invention concerne plus précisément une lentille à immersion solide réalisée dans un matériau ayant un indice de réfraction n1, possédant un dioptre utile de séparation avec un milieu ayant un indice de réfraction n2, un axe optique, un foyer objet virtuel pour un faisceau optique convergent entrant dans la lentille par le dioptre utile, ce foyer objet virtuel étant conjugué avec un foyer image réel. Le dioptre utile est défini par l'équation

$$\sqrt{x^2 + y^2} - n\sqrt{(x-a)^2 + y^2} = L \quad \text{dans laquelle :}$$

x, y représentent les coordonnées d'un point du dioptre utile dans un repère cartésien ayant pour origine le foyer objet virtuel et pour axe des abscisses l'axe optique,

a est la distance algébrique entre le foyer objet virtuel et son conjugué, cette distance étant non nulle,

L est le chemin optique séparant le foyer objet virtuel de son conjugué, ce chemin optique étant constant et non nul,

n est le rapport de l'indice de réfraction n1 sur l'indice de réfraction n2, le dioptre utile étant lisse et le conjugué étant situé en aval du dioptre utile pour le faisceau optique.

On rappelle que dans un système optique, le foyer objet virtuel correspond au point de convergence du prolongement dans leur direction initiale des rayons d'un faisceau incident convergent qui entre dans le système optique. Le foyer est qualifié de foyer objet car il est construit à partir de rayons entrants dans le système optique et de foyer virtuel car ce sont les prolongements des rayons qui se coupent en ce point. Les rayons qui vont sortir du système optique ne suivent pas ce chemin. Le foyer image réel correspond au point de convergence des rayons qui sortent du système optique et qui résultent du faisceau convergent incident. Ce foyer est qualifié de foyer image car ce sont les rayons sortants qui se coupent en ce point et de foyer réel car ce sont les rayons eux-mêmes qui se coupent en ce point.

La lentille comporte un autre dioptre à l'opposé du dioptre utile, cet autre dioptre est avantageusement sensiblement plan.

Il est préférable que le conjugué du foyer objet virtuel se trouve au niveau de l'autre dioptre.

Dans une application de tête de lecture et/ou d'enregistrement et/ou de reproduction d'informations optiques notamment, il est préférable que la lentille à immersion solide comporte un bord chanfreiné qui s'évase en se rapprochant du dioptre utile de manière à éviter un contact entre la lentille et un support d'enregistrement des informations optiques.

Il est préférable que, lorsque son dioptre utile est éclairé par un faisceau optique ayant une dimension transversale maximale, la distance algébrique entre le foyer objet virtuel et son conjugué soit sensiblement égale à la dimension transversale maximale du faisceau optique qui éclaire le dioptre utile.

La lentille à immersion solide possède une dimension transversale maximale, il est préférable que la distance algébrique entre le foyer objet virtuel et son conjugué soit sensiblement égale à sa dimension transversale maximale.

Le matériau de la lentille à immersion solide peut être avantageusement du diamant ou du verre LaSF35.

La présente invention concerne également une tête optique qui comporte un objectif de focalisation coopérant avec une lentille à immersion solide ainsi définie, le dioptre utile de la lentille à immersion solide se trouvant du côté de l'objectif de focalisation.

La présente invention concerne également un appareil optique qui comporte une tête optique ainsi définie. Cet appareil optique peut être un appareil de lecture et/ou d'enregistrement et/ou de reproduction d'informations optiques, un microscope, un appareil de lithographie.

**BRÈVE DESCRIPTION DES DESSINS**

La présente invention sera mieux comprise à la lecture de la description d'exemples de réalisation donnés, à titre purement indicatif et nullement limitatif, en faisant référence aux dessins annexés sur lesquels :

les figures 1A, 1B (déjà décrites) représentent une tête optique comportant respectivement une lentille à immersion solide hémisphérique et une lentille à immersion solide super-sphérique ;
la figure 2 illustre un appareil optique selon l'invention doté d'une tête optique selon l'invention, elle-même dotée d'une lentille à immersion solide selon l'invention ;
la figure 3 illustre une portion du dioptre utile d'une lentille à immersion solide selon l'invention ainsi que les rayons réels et virtuels qui la traversent ;
la figure 4A illustre une lentille à immersion solide conforme à l'invention ainsi que la développée de son dioptre utile, les figures 4B, 4C montrant les dioptres utiles et leurs développées de lentilles à immersion solide conventionnelles respectivement hémisphérique et super-sphérique ;

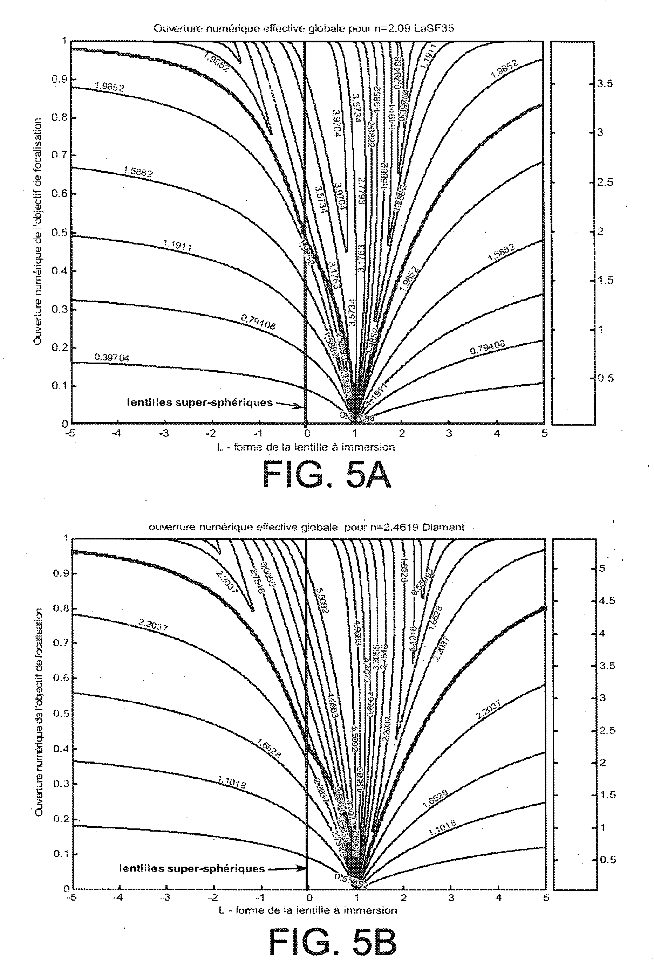

les figures 5A, 5B sont des abaques permettant de déterminer le dioptre utile de lentilles à immersion solide de l'invention ;
la figure 6A donne un exemple de lentille à immersion solide super-sphérique, la figure 6B est une courbe d'optimisation permettant de déterminer le dioptre utile d'une lentille à immersion solide de l'invention dérivée de la lentille à immersion solide de la figure 6A, la figure 6C illustre un exemple de dioptre utile d'une lentille à immersion solide obtenu à partir de la courbe de la figure 6B ;
la figure 6D donne un exemple de lentille à immersion solide hémisphérique, la figure 6E est une courbe d'optimisation permettant de déterminer le dioptre utile d'une lentille à immersion solide de l'invention dérivée de la lentille à immersion solide de la figure 6D, les figures 6F et 6G illustrent le dioptre utile de deux lentilles à immersion solide obtenu à partir de la courbe de la figure 6D.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

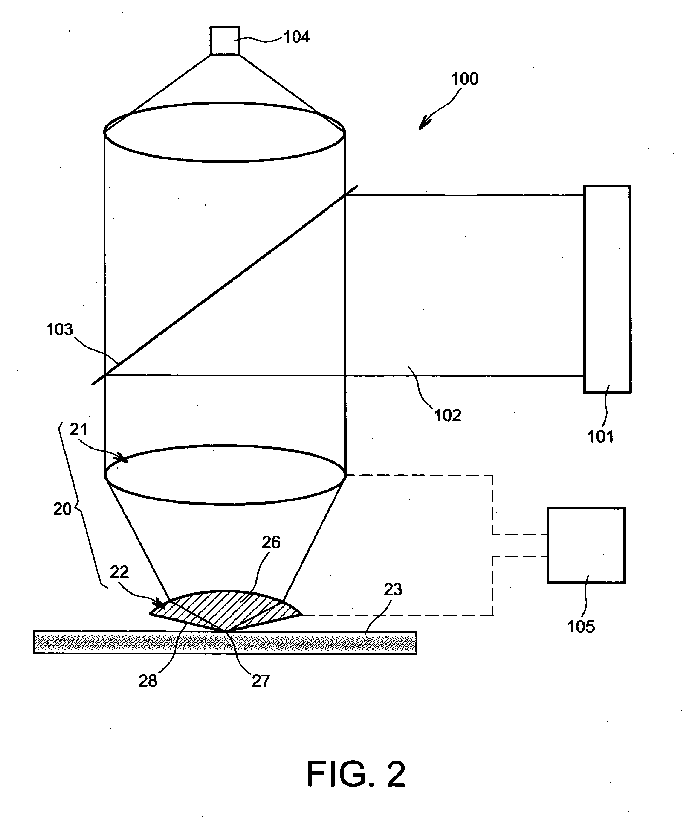

On va maintenant se référer à la figure 2 qui illustre un exemple de lentille à immersion solide selon l'invention dont est dotée une tête optique 20 d'un appareil optique 100 selon l'invention. Dans l'exemple décrit, la tête optique 20 est une tête de lecture et/ou d'enregistrement et l'appareil optique 100 est un appareil de lecture et/ou d'enregistrement et/ou de reproduction d'informations optiques sur un support d'enregistrement optique 23. L'appareil aurait tout aussi bien pu être un microscope ou un appareil de lithographie. Dans des appareils de type microscope ou appareil de lithographie, la tête optique serait bien sûr configurée de la même manière, c'est pourquoi on n'a pas représenté explicitement de telles têtes afin de ne pas accroître de manière inutile le nombre de figures. Il en est de même pour l'appareil optique. Comme dans les exemples précédents, la lentille à immersion solide 22 est intercalée entre l'objectif 21 de la tête optique 20 et le support d'enregistrement optique 23.

La lentille à immersion solide 22 selon l'invention possède deux dioptres opposés, l'un référencé 27 se trouvant du côté du support d'enregistrement optique 23 et l'autre dit utile référencé 26 se trouvant du côté de l'objectif 21 de la tête optique 20. Dans un microscope électronique, le support d'enregistrement serait remplacé par un objet à observer et dans un appareil de lithographie par un objet sur lequel on va projeter un motif.

L'appareil optique 100 comporte de plus une source optique 101 (par exemple un laser) destinée à émettre un faisceau optique 102 vers un séparateur de faisceau 103. Le faisceau optique 102 est dévié par le séparateur de faisceau 103 et concentré sur le support d'enregistrement optique 23 après avoir traversé la tête optique 20. Le faisceau optique 102 qui arrive sur le support d'enregistrement optique 23 est réfléchi et récupéré par un dispositif de réception 104 par exemple de type photodiode. L'appareil optique 100 comporte de plus des moyens 105 pour asservir la position de la tête optique 20 à celle du support d'enregistrement optique 23. Les éléments bien connus de l'appareil ne sont pas représentés en détail afin de ne pas alourdir inutilement la présente description.

Comme précédemment, le dioptre 27 se trouvant du côté du support d'enregistrement optique 23 est sensiblement plan. L'autre dioptre 26 est maintenant asphérique, il s'agit du dioptre utile. Le faisceau optique 102 est convergent et il rentre dans la lentille par le dioptre utile 26. Cette lentille à immersion solide réalise toujours un stigmatisme rigoureux, c'est-à-dire que le chemin optique entre un point objet et un point image est indépendant du chemin des rayons lumineux qui traversent la lentille. La lentille à immersion solide selon l'invention n'utilise donc pas le même type de conjugaisons propres aux dioptres sphériques, elle ne réalise pas le même gain en taille de spot, ni en ouverture numérique, ni en profondeur de champ.

On suppose que la lentille à immersion solide de l'invention est réalisée dans un matériau ayant un indice de réfraction $n1$ et qu'elle est destinée à être plongée dans un milieu ayant un indice de réfraction $n2$ différent de $n1$. En général $n2$ est de l'air et vaut 1. La matériau de la lentille pourra être, par exemple, du diamant dont l'indice de réfraction est de 2, 4619 pour une longueur d'onde de 405 nanomètres ou du verre par exemple de type LaSF35 (dénomination du catalogue de la société Schott) dont l'indice de réfraction vaut 2,02 pour une longueur d'onde de 405 nanomètres. On appellera par la suite $n$ le rapport $n2/n1$.

La forme du dioptre utile 26 de la lentille à immersion solide est définie par l'équation suivante :

$$\sqrt{x^2 + y^2} - n\sqrt{(x-a)^2 + y^2} = L \qquad (3)$$

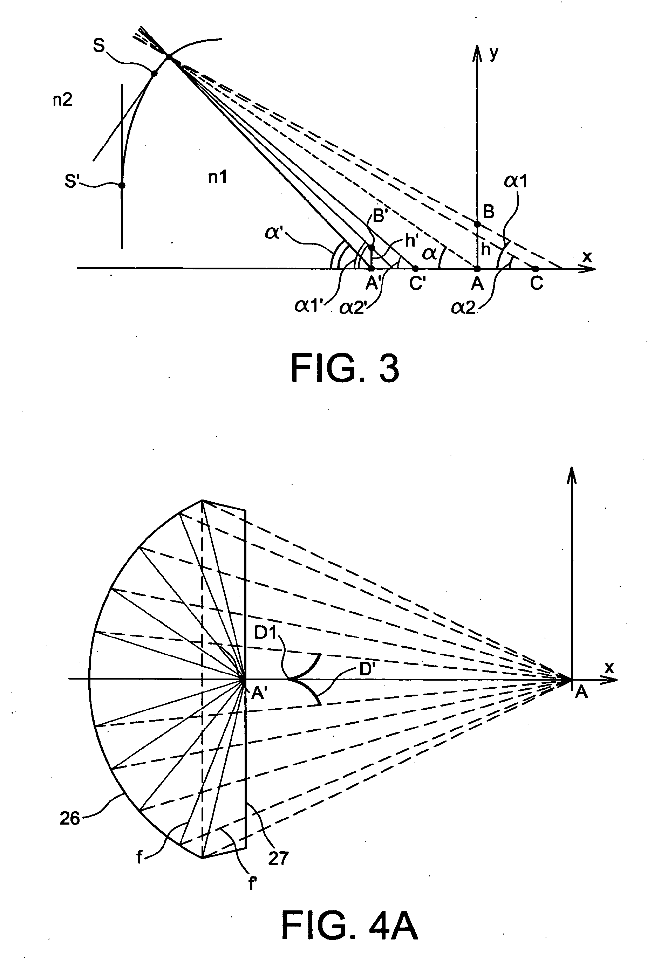

avec x, y coordonnées d'un point I du dioptre utile dans un repère cartésien (A, x, y), illustré sur la figure 3, ayant une origine A et un axe des abscisses Ax qui est un axe optique de la lentille et un axe des ordonnées qui est un axe méridien de la lentille. Le dioptre utile est une surface de révolution autour de l'axe optique Ax. L'axe optique Ax est dirigé vers l'aval du dioptre utile pour un faisceau optique traversant la lentille depuis le dioptre utile. L'origine A est conjuguée avec un point A' placé également sur l'axe optique Ax et la grandeur algébrique AA' est notée a. Cette grandeur a peut être vue comme un facteur de forme. Le point A est un point objet ou le foyer objet virtuel de la lentille. Le point A' peut se trouver au niveau de l'autre dioptre de la lentille ou être immergé ou être hors de la lentille. Il correspond au foyer image réel de la lentille. Le point A' peut aussi être appelé point image. La grandeur L représente le chemin optique entre l'origine A et son conjugué A'. La grandeur L est constante et non nulle. La grandeur a est également non nulle. En fait les points A et A' vérifient de manière générale le principe de Fermat qui s'exprime par :

$$\overline{IA} + n\,\overline{IA'} = L \qquad\qquad (4)$$

ce qui garantit le stigmatisme rigoureux.

La courbe décrite par le point I(x, y) n'est pas un cercle puisqu'elle ne peut se mettre sous la forme $(x-u)^2 + (y-u)^2 = R^2$. Ce n'est pas non plus une conique, elle ne peut se mettre sous la forme $ex^2+fy^2+gxy+hx+iy+j=0$ car si l'équation (3) est élevée au carré, il reste une quantité sous la racine carrée.

Pour définir le dioptre utile de la lentille selon l'invention, on pourra choisir la grandeur a sensiblement égale à la dimension transversale maximale qu'a le faisceau optique au niveau du dioptre utile ou bien sensiblement égale à la dimension transversale maximale de la lentille. Lorsque le faisceau optique a une section circulaire, cette dimension transversale maximale est son diamètre. Lorsque la lentille à immersion solide est circulaire, la dimension transversale maximale est son diamètre.

En fonction de l'ouverture numérique souhaitée, on obtient alors la grandeur L comme on le verra par la suite.

La puissance de focalisation de la lentille influe directement sur la taille du spot illuminant le support d'enregistrement optique 23. La taille du spot au niveau du foyer image réel de la lentille à immersion solide est donné par l'équation (1) ce qui donne en combinant les équations (1) et (2).

$$d' = 1,22\lambda/n1\sin(\alpha') \qquad\qquad (5)$$

Pour le dioptre utile de la lentille de l'invention dont l'équation est donnée en (3), il vient :

$$\sin(\alpha) = \frac{y}{\sqrt{x^2 + y^2}} \qquad \sin(\alpha') = \frac{y}{\sqrt{(x-a)^2 + y^2}} \qquad (6)$$

On obtient alors :

$$\left|\frac{\sin(\alpha')}{\sin(\alpha)}\right| = \left|\frac{n}{1 - L/r}\right| \qquad\qquad (7)$$

Le rapport des ouvertures numériques NA'/NA avec lentille à immersion solide et sans lentille à immersion solide traduit la puissance de focalisation.

$$P = \frac{n^2}{\left|1 - L/r\right|} \qquad\qquad (8)$$

r représente la distance séparant le point I(x,y) du dioptre utile à l'origine A.

Cette grandeur P est supérieure à $n^2$ car $1/1-L/r$ peut être inférieur à un pour certaines valeurs de L.

Pour une lentille à immersion solide hémisphérique, le dioptre utile obéit à :

$$\sqrt{x^2 + y^2} = \left|\frac{L}{1 - n}\right| \qquad\qquad (9)$$

ce qui signifie que par rapport à l'équation (3) a=0 et L/r= n+1, on obtient bien P = n. Dans ce cas, A est confondu avec A'.

Pour une lentille à immersion solide super-sphérique, le dioptre utile obéit à :

$$\left(x - \frac{an^2}{n^2-1}\right)^2 + y^2 = \left(\frac{an}{n^2-1}\right)^2 \qquad (10)$$

ce qui signifie que par rapport à l'équation (3) L=0, on obtient bien P = n$^2$.

En revenant à la lentille de l'invention à dioptre utile asphérique, la puissance de focalisation dépend de la grandeur r. Cela signifie que selon l'incidence, un rayon qui percute ce dioptre asphérique, va être réfracté avec un gain d'ouverture numérique différent. Il existe une infinité de dioptres utiles rigoureusement stigmatiques qui obéissent à l'équation (3) lorsque la grandeur a est fixée.

Pour que la lentille selon l'invention puisse être techniquement réalisable, il faut également que deux conditions soient vérifiées. La première est que le dioptre utile soit lisse, ce qui signifie que la courbe qui définit ce dioptre utile est dérivable une fois et que sa dérivée est continue. En d'autres termes, elle possède une tangente unique en tous points. La seconde est que le point A' soit situé en aval du dioptre utile pour un faisceau optique entrant dans la lentille par le dioptre utile et ressortant par l'autre dioptre. L'expression « est situé en aval du dioptre utile » veut dire que l'abscisse du point conjugué A' dans le repère (A, x, y) est supérieure algébriquement à celles des points du dioptre utile ou est égale à l'abscisse la plus grande des points du dioptre utile. On a orienté l'axe Ax des abscisses de manière à ce qu'il soit dirigé vers l'aval du dioptre utile pour un faisceau optique entrant dans la lentille par le dioptre utile et sortant par l'autre dioptre. Le point A' n'est pas situé strictement en amont de tous les points du dioptre.

Il est avantageux de réduire la surface de la lentille à immersion solide 22 la plus proche du support d'enregistrement optique 23 pour éviter des risques de contact entre lentille à immersion solide et support d'enregistrement optique. Cela peut se faire en chanfreinant le bord 28 de la lentille à immersion solide 22 selon l'invention entre les deux dioptres 26, 27. Le bord chanfreiné 28 s'évase plus on se rapproche du dioptre utile 26. Le bord chanfreiné 28 n'est .pas traversé par le faisceau optique 102 ce qui n'introduit pas d'altération de ses propriétés.

Comme dans les lentilles à immersion solide conventionnelles, le foyer image réel A' se trouve de préférence au niveau de l'autre dioptre 27 ainsi la taille du spot sur le support d'enregistrement 23 est la plus petite possible.

Nous allons maintenant comparer la développée du dioptre utile asphérique de la lentille selon l'invention avec celle des dioptres utiles hémisphérique et super-shérique des lentilles conventionnelles.

On va rappeler brièvement la notion de rayon de courbure en se référant à la figure 3. La courbure moyenne d'une courbe I(x, y) entre deux points S et S' se quantifie par le rapport entre l'angle formé par les tangentes à la courbe en S et S' et par la longueur de l'arc SS'. Le rayon de courbure moyen est l'inverse de la courbure moyenne par définition. Si S et S' se rapprochent indéfiniment, la limite de la courbure moyenne correspond à ce qui peut s'appeler courbure en un point unique S. Le rayon de courbure en ce point unique S est toujours l'inverse de la courbure. Le centre de courbure se trouve à l'extrémité libre du rayon de courbure. Intuitivement le rayon de courbure (non représenté sur la figure 3) d'une courbe I(x, y) en un point S est le rayon du cercle qui épouse au mieux la courbe I(x, y) au voisinage du point S. Ainsi pour une droite, le rayon de courbure est infini et la courbure est nulle. Pour un cercle, la courbure est constante et vaut l'inverse du rayon.

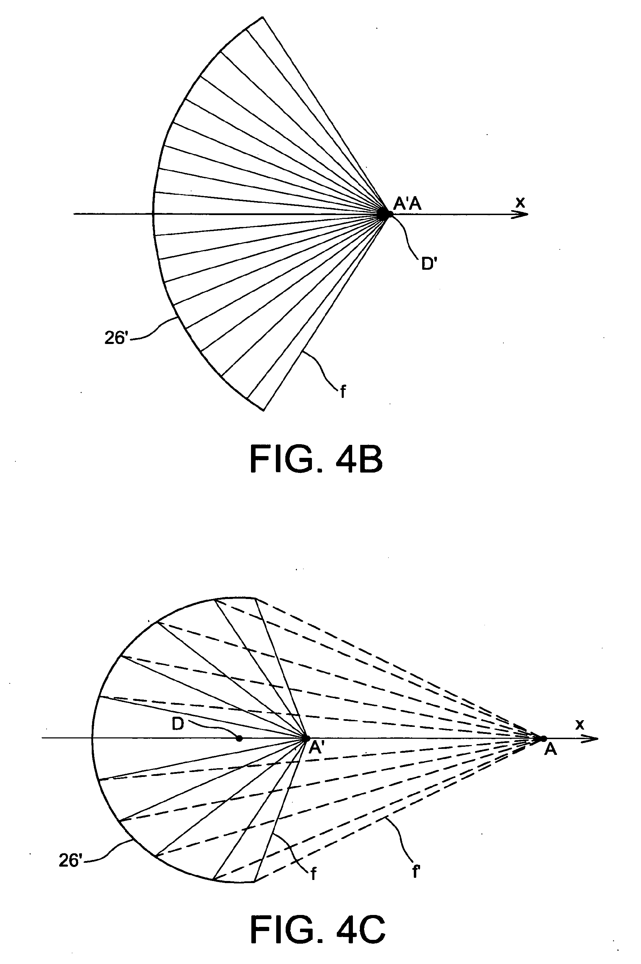

La développée du dioptre utile est la surface obtenue par la révolution autour de l'axe optique Ax de la développée de la courbe méridienne à ce dioptre utile. On rappelle que la développée d'une courbe est le lieu suivi par le centre de courbure lorsque le rayon de courbure parcourt la courbe. Les figures 4A, 4B, 4C illustrent respectivement la développée du dioptre utile d'une lentille à immersion solide selon l'invention, celle du dioptre utile d'une lentille à immersion solide hémisphérique et celle du dioptre utile d'une lentille à immersion solide super-sphérique conventionnelles. Sur ces figures, le dioptre utile 26, 26' est représenté ainsi que des rayons optiques f se focalisant au foyer image réel immergé A' (point image). Des rayons optiques virtuels f' sont aussi illustrés sur les figures 4A et 4C, ils se concentrent au foyer objet virtuel A (point objet), puisque dans ces cas les foyers A et A' sont distincts.

Cette développée est révélatrice de la nature du dioptre utile. Si cette développée est un point (noté D) comme sur la figure 4B, cela signifie que le dioptre utile est sphérique, ce point D se trouvant confondu avec le point A lui-même confondu avec le point A'). Sur la figure 4C, ce point D est distincts des points A et A'. Il a une abscisse plus petite que celle des foyers A et A'. Sur la figure 4A, la développée D' est une courbe sensiblement en V dont la pointe D1 représente le centre d'un cercle qui épouse au mieux la courbe I(x,y) au voisinage de l'axe optique Ax. Ce point D1 constitue le centre de courbure paraxial et une première approximation d'ordre un du dioptre utile 26. On pourrait démontrer que la forme de la développée du dioptre utile 26 s'apparente à celle d'une parabole semi-cubique qui se développe de part et d'autre de l'axe optique Ax. Cette parabole semi-cubique est la développée générale d'une conique, ceci confirme que le dioptre utile 26 est approximable à l'ordre deux par une conique, dont l'équation s'obtient en réalisant un développement limité à l'ordre deux du radical présent dans l'équation (3).

On a vu que le dioptre utile de la lentille selon l'invention était rigoureusement stigmatique pour le couple de points A et A'. L'aberration est nulle pour une mise au point parfaite au foyer image réel A'. Par contre, il est intéressante d'analyser dans quelles conditions un point B voisin de A dans un plan orthogonal à l'axe optique Ax passant par A se conjugue parfaitement en un point B' voisin de A', situé dans un plan orthogonal à l'axe optique Ax passant par A'. Cette conjugaison parfaite caractérise les lentilles aplanétiques. On peut se référer à la figure 3.

S'il y a conjugaison entre B et B' on peut écrire :

$$dL = -\overrightarrow{AB}.\vec{u} + \overrightarrow{A'B'}.\vec{u} \qquad (11)$$

avec dL constante.

On tombe alors sur la condition bien connue d'Abbe qui lie les deux points B et B'. Posons AB=h et $\overline{A'B'}$=h'. On peut écrire l'équation :

$$h' = \frac{\sin(\alpha 1)}{n\sin(\alpha 1')} h \qquad (12)$$

ainsi que l'équation :

$$h' = \frac{h(1 - L/r(\alpha 1))}{n^2} \qquad (13)$$

On s'aperçoit donc que le point B' varie avec l'angle $\alpha 1$.

La lentille à immersion solide selon l'invention n'est pas aplanétique alors que la lentille à immersion solide super-sphérique l'est. La lentille à immersion solide hémisphérique ne l'était pas non plus.

De la même manière, en utilisant la même méthode de différentiation de chemin optique, on peut analyser la condition de conservation de conjugaison entre un point C situé sur l'axe optique Ax voisin de A et un point C' appartenant à l'axe optique Ax et voisin de A'. On aboutit à l'équation suivante (14) connue sous la dénomination de condition d'Herschell. Posons $\overline{AC}$ = k et $\overline{A'C'}$ = k'. On obtient :

$$k' = \frac{\sin^2(\alpha 2/2)}{n\sin^2(\alpha 2'/2)} k \qquad (14)$$

Ainsi le point C' conjugué de C dépend dans toutes les configurations de l'angle $\alpha$. La lentille à immersion solide de l'invention ne conserve pas le stigmatisme le long de l'axe optique Ax. Le point C est sur l'axe optique Ax.

Les deux figures suivantes 5A, 5B sont des abaques d'optimisation pour réaliser des lentilles à immersion solide selon l'invention respectivement dans le cas du verre LaSF35 (indice de réfraction n1= 2,09) et de diamant (indice de réfraction n1= 2,46) pour une longueur d'onde de 405 nm. En abscisse, on trouve la grandeur L de l'équation (3) et en ordonnée, l'ouverture numérique du faisceau optique illuminant le dioptre utile de la lentille. On a choisi la grandeur a = 1. Des unités arbitraires sont utilisées. Les différentes courbes en traits fins situées en dessous des courbes en traits épais représentent les ouvertures numériques globales possibles pour une lentille asphérique selon l'invention coopérant avec un objectif de focalisation. Au-dessus des courbes en trait épais, on trouve des ouvertures numériques qui ne peuvent être atteintes car la lentille selon l'invention n'est pas réalisable, comme cela a été expliqué plus haut. La droite passant par l'abscisse zéro est exclue car elle caractérise une lentille à immersion solide super-sphérique (avec L = 0). Une fois que la grandeur a est choisie et que les abaques sont tracées par ordinateur en fonction des matériaux, de la longueur d'onde et de l'ouverture numérique de l'objectif de focalisation, il suffit de choisir l'ouverture numérique globale qui convient pour une application donnée et de déduire la grandeur L de la lentille. L'équation à laquelle le dioptre utile obéit est alors obtenue. Une telle lentille peut alors être construite par moulage ou par usinage puisque son dioptre utile est parfaitement déterminé.

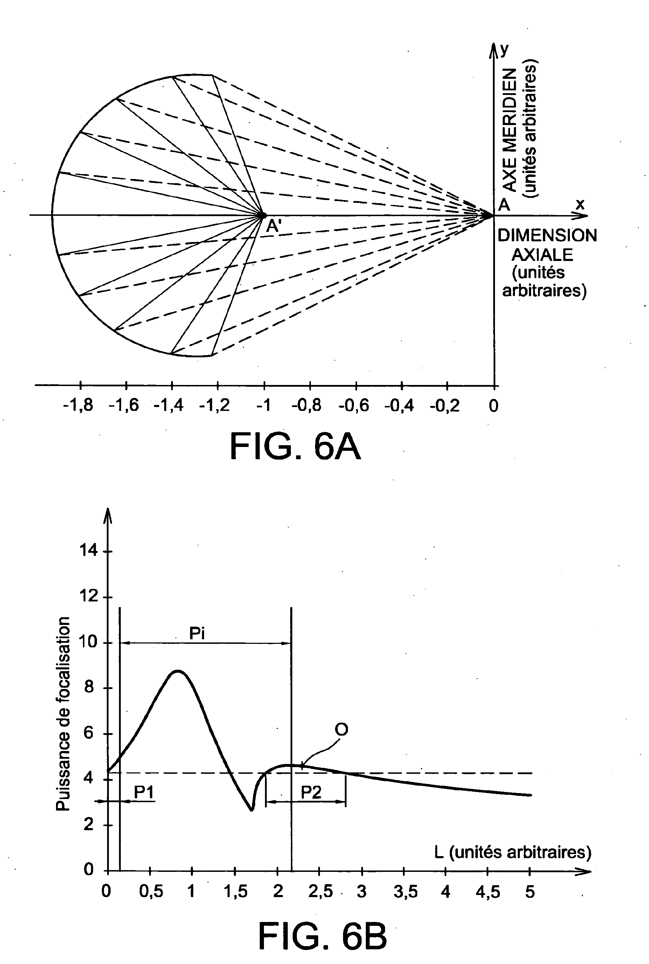

On va maintenant en se référant aux figures 6A à 6G décrire des exemples de lentilles à immersion solide selon l'invention et faire une comparaison avec des lentilles à immersion solide super-sphérique et hémisphérique conventionnelles.

On va s'intéresser à une tête optique utilisée dans l'air comprenant un objectif de focalisation dont l'ouverture numérique NA vaut 0,45 et qui coopère avec une lentille à immersion solide super-sphérique conventionnelle en verre LaSF35 dont l'indice de réfraction n1 vaut 2,09. La puissance de focalisation de la lentille vaut $n1^2$ soit 4,3681. Le dioptre utile de cette lentille est illustré sur la figure 6A. L'ouverture numérique NA' de la tête optique vaut $n1^2$ NA soit 1,97. Comme précédemment, le foyer objet virtuel de la lentille est appelé A, le foyer image réel de la lentille est appelé A' et la distance AA' est choisie égale à -1. La lentille est placée dans un repère cartésien (A, x, y) dont l'origine est A, l'axe des abscisses est l'axe optique de la lentille et l'axe des ordonnées est l'axe méridien de la lentille. Des rayons image réels sont représentés en traits pleins, ils passent par le point A'. Des rayons objet virtuels sont représentés en traits pointillés, ils passent par le point A.

La figure 6B illustre une courbe d'optimisation permettant, à partir de la lentille à immersion solide super-sphérique illustrée sur la figure 6A d'obtenir une lentille à immersion solide asphérique de l'invention. Le paramètre a reste égal à -1. On fait évoluer le paramètre L de chemin optique, exprimé en grandeurs arbitraires, et on observe les variations de la puissance de focalisation de la lentille ayant un dioptre utile obtenu avec ces valeurs de L et a. La plage notée Pi illustre une zone dans laquelle on ne peut pas techniquement réaliser un tel dioptre utile. On a également illustré deux plages P1, P2 qui correspondent à celles de lentilles à immersion solide selon l'invention. La droite en pointillés représente le niveau de puissance de focalisation de la lentille à immersion solide super-sphérique de la figure 6A. Il faut noter que la courbe d'optimisation qui a été tracée est spécifique à un objectif de focalisation donné de la tête optique et à l'indice de réfraction du matériau de la lentille à immersion solide.

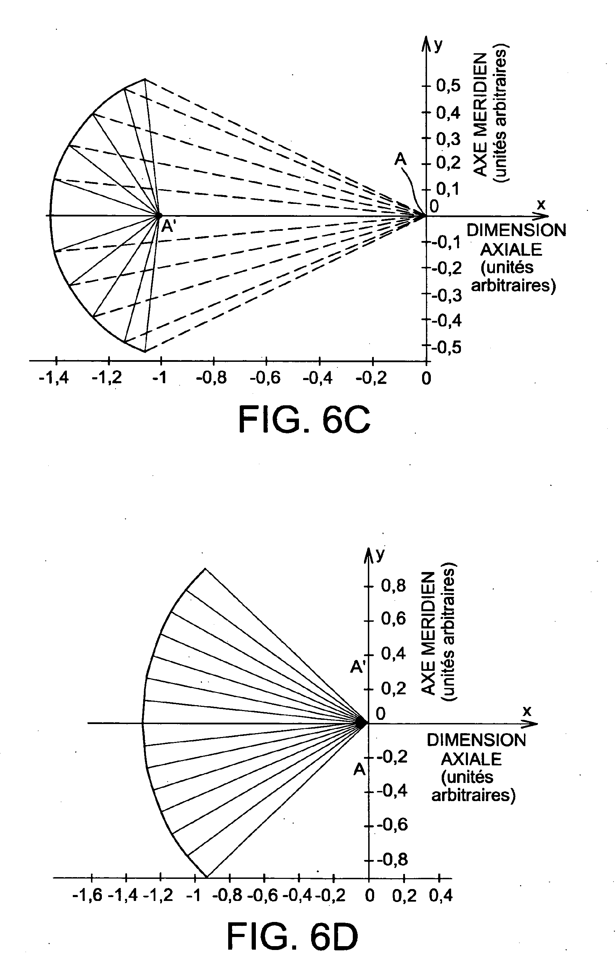

La figure 6C illustre un exemple de dioptre utile d'une lentille à immersion solide selon l'invention, obtenu à partir de la courbe d'optimisation de la figure 6B lorsque le paramètre L prend une valeur optimisée de 2,3. Sur la figure 6B, cette valeur est repérée par un point 0. L'ouverture numérique NA' de la tête optique (objectif de focalisation+lentille) vaut. 2,08 alors qu'elle valait 1,97 avec la lentille à immersion solide super-sphérique de la figure 6A.

On va s'intéresser à une tête optique comprenant un objectif de focalisation dont l'ouverture numérique NA vaut 0,7 et qui coopère avec une lentille à immersion solide hémisphérique conventionnelle en verre LaSF35 dont l'indice de réfraction n1 vaut 2,09. La puissance de focalisation de la lentille vaut n1 soit 2,09. Le dioptre utile de cette lentille est illustré sur la figure 6D. L'ouverture numérique NA' de la tête optique vaut n1NA soit 1,463. La distance AA' est maintenant nulle (a=0), le point A étant confondu avec le point A'. La lentille à immersion solide est placée dans le repère cartésien (A, x, y). Des rayons image réels sont représentés, ils convergent vers le point A'. Ils sont confondus avec les rayons objet virtuels.

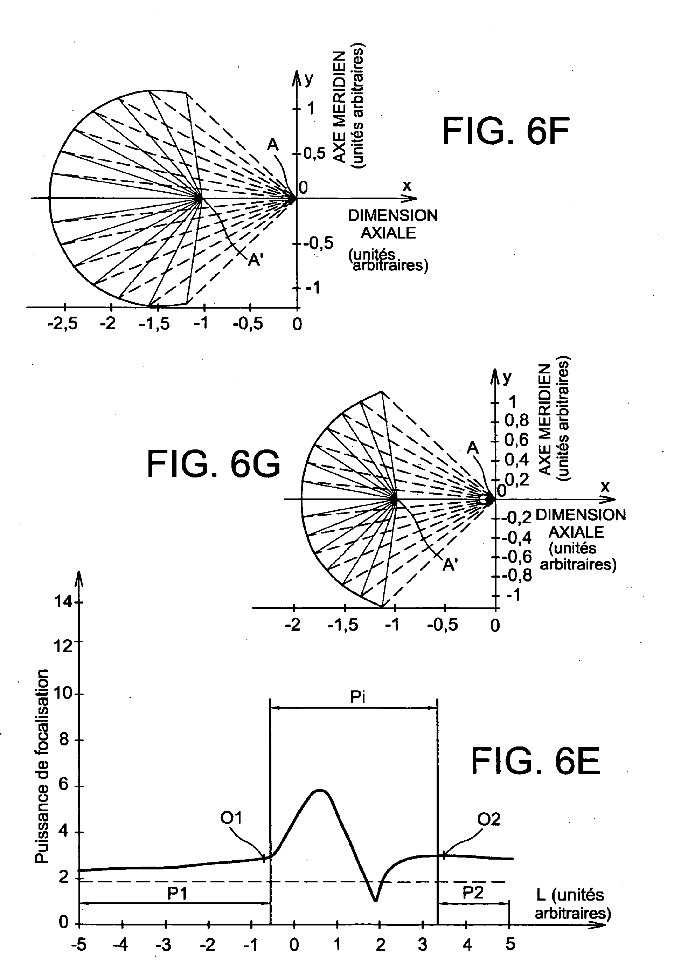

La figure 6E illustre une courbe d'optimisation permettant, à partir de la lentille à immersion solide hémisphérique illustrée sur la figure 6D d'obtenir une lentille à immersion solide asphérique de l'invention. On fait évoluer le paramètre L de chemin optique, exprimé en grandeurs arbitraires, et on observe les variations de la puissance de focalisation de la lentille ayant un dioptre utile obtenu avec ces valeurs de L et a=0. La plage notée Pi illustre la zone dans laquelle on ne peut pas techniquement réaliser un tel dioptre utile. On a également illustré deux plages P1, P2 qui correspondent à celles de lentilles à immersion solide selon l'invention. La droite en pointillés représente le niveau de puissance de focalisation de la lentille à immersion solide hémisphérique de la figure 6D.

La figure 6F illustre un premier exemple de dioptre utile d'une lentille à immersion solide selon l'invention, obtenu à partir de la courbe d'optimisation de la figure 6E lorsque le paramètre L prend une valeur optimisée de -0,8. Sur la figure 6E, cette valeur est repérée par un point 01. L'ouverture numérique NA' de la tête optique vaut 2,06 alors qu'elle valait 1,463 avec la lentille hémisphérique de la figure 6D.

La figure 6G illustre un deuxième exemple de dioptre utile d'une lentille selon l'invention, obtenu à partir de la courbe d'optimisation de la figure 6E lorsque le paramètre L prend une valeur optimisée de 3,5. Sur la figure 6E, cette valeur est repérée par un point 02. L'ouverture numérique NA' de la tête optique vaut 2,07 alors qu'elle valait 1,463 avec la lentille hémisphérique de la figure 6D.

Sur les figures 6C, 6F, 6G, on s'aperçoit que le dioptre utile est défini par une courbe lisse et que l'abscisse du point A' (-1) est supérieure à l'abscisse de chacun des points du dioptre utile. L'abscisse maximale des points du dioptre utile a été repérée. Les deux conditions supplémentaires nécessaires à l'obtention du dioptre utile de la lentille selon l'invention sont satisfaites.

Bien que plusieurs modes de réalisation de la lentille à immersion solide selon l'invention aient été représentés et décrits de façon détaillée, on comprendra que différents changements et modifications puissent être apportés sans sortir du cadre de l'invention.

## Revendications

1. Lentille à immersion solide réalisée dans un matériau ayant un indice de réfraction n1, possédant un dioptre utile (26) de séparation avec un milieu ayant un indice de réfraction n2, un axe optique (Ax), un foyer objet virtuel (A) pour un faisceau optique convergent entrant dans la lentille par le dioptre utile, ce foyer objet virtuel étant conjugué avec un foyer image réel (A'), **caractérisée en ce que** le dioptre utile (26) est défini par l'équation

$$\sqrt{x^2 + y^2} - n\sqrt{(x-a)^2 + y^2} = L \quad \text{dans laquelle :}$$

x, y représentent les coordonnées d'un point (I) du dioptre utile (26) dans un repère cartésien (A, x, y) ayant pour origine le foyer objet virtuel (A) et pour axe des abscisses l'axe optique (Ax),
a est la distance algébrique entre le foyer objet virtuel (A) et son conjugué (A'), cette distance étant non nulle,
L est le chemin optique séparant le foyer objet virtuel (A) de son conjugué (A'), ce chemin optique étant constant et non nul,
n est le rapport de l'indice de réfraction n1 sur l'indice de réfraction n2,
et **en ce que** le dioptre utile (26) est lisse et le conjugué (A') est situé en aval du dioptre utile (26) pour le faisceau optique.

2. Lentille à immersion solide selon la revendication 1, **caractérisée en ce que**lle comporte un autre dioptre (27) à l'opposé du dioptre utile (26), cet autre dioptre étant sensiblement plan.

3. Lentille à immersion optique selon la revendication 2, **caractérisée en ce que** le conjugué (A') du foyer objet virtuel (A) se trouve au niveau de l'autre dioptre (27).

4. Lentille à immersion solide selon l'une des revendications 1 à 3, **caractérisée en ce qu'**elle comporte un bord chanfreiné (28) qui s'évase en se rapprochant du dioptre utile (26).

5. Lentille à immersion solide selon l'une des revendications 1 à 4, **caractérisée en ce que**, lorsque son dioptre utile est éclairé par un faisceau optique ayant une dimension transversale maximale, la distance algébrique (a) entre le foyer objet virtuel (A) et son conjugué (A') est sensiblement égale à la dimension transversale maximale du faisceau optique qui éclaire le dioptre utile (26).

6. Lentille à immersion solide selon l'une des revendications 1 à 5, possédant une dimension transversale maximale, **caractérisée en ce que** la distance algébrique entre le foyer objet virtuel (A) et son conjugué (A') est sensiblement égale à sa dimension transversale maximale.

7. Lentille à immersion solide selon l'une des revendications 1 à 6, **caractérisée en ce que** le matériau qui la réalise est du diamant ou du verre LaSF35.

8. Tête optique (20), **caractérisée en ce qu'**elle comporte un objectif de focalisation (21) qui coopère avec une lentille à immersion optique (22) selon l'une des revendications 1 à 7, le dioptre utile (26) de la lentille à immersion solide se trouvant du côté de l'objectif de focalisation (21).

9. Appareil optique (100) **caractérisé en ce qu'**il comporte une tête optique (20) selon la revendication 8.

10. Appareil optique (100) selon la revendication 9, **caractérisé en ce que** c'est un appareil de lecture et/ou d'enregistrement et/ou de reproduction d'informations optiques, un microscope, un appareil de lithographie.

**Claims**

1. Solid immersion lens made in a material with a refractive index n1, having an effective dioptre (26) separating from a medium of refractive index n2, an optical axis (Ax), a virtual object focal point (A) for a convergent optical beam entering the lens via the effective dioptre, this virtual object focal point being conjugate with a real image focal point (A'), **characterized in that** the effective dioptre (26) is defined by the equation

$$\sqrt{x^2 + y^2} - n\sqrt{(x-a)^2 + y^2} = L \quad \text{in which:}$$

x, y are the coordinates of a point (I) of the effective dioptre (26) in a Cartesian coordinate system (A, x, y) whose origin is the virtual object focal point (A) and whose abscissa axis is the optical axis (Ax),
a is the algebraic distance between the virtual object focal point (A) and its conjugate (A'), this distance being nonzero,
L is the optical path separating the virtual object focal point (A) from its conjugate (A'), this optical path being constant and nonzero,
n is the ratio of refractive index n1 to refractive index n2,
and **in that** the effective dioptre (26) is smooth and conjugate (A') lies downstream of the effective dioptre (26) for the optical beam.

2. Solid immersion lens according to claim 1, **characterized in that** it comprises another dioptre (27) opposite the effective dioptre (26), this other dioptre being substantially planar.

3. Optical immersion lens according to claim 2, **characterized in that** the conjugate (A') of the virtual object focal point (A) lies at the other dioptre (27).

4. Solid immersion lens according to any of claims 1 to 3, **characterized in that** it comprises a bevelled edge (28) which flares outwardly as it draws close to the effective dioptre (26).

5. Solid immersion lens according to any of claims 1 to 4, **characterized in that**, when the effective dioptre is illuminated by an optical beam having a maximum cross-section dimension, the algebraic distance (a) between the virtual object focal point (A) and its conjugate (A') is substantially equal to the maximum cross-section dimension of the optical beam illuminating the effective dioptre (26).

6. Solid immersion lens according to any of claims 1 to 5, having a maximum cross-section dimension, **characterized in that** the algebraic distance between the virtual object focal point (A) and its conjugate (A') is substantially equal to its maximum cross-section dimension.

7. Solid immersion lens according to any of claims 1 to 6, **characterized in that** its constituent material is diamond or LaSF35 glass.

8. Optical head (20), **characterized in that** it comprises an objective lens (21) which cooperates with an optical immersion lens (22) according to any of claims 1 to 7, the effective dioptre (26) of the solid immersion lens lying on the side of the objective lens (21).

9. Optical apparatus (100) **characterized in that** it comprises an optical head (20) according to claim 8.

10. Optical apparatus (100) according to claim 9, **characterized in that** it is read and/or write and/or reproduction apparatus for optical data, a microscope, lithography equipment.

**Patentansprüche**

1. Festkörperimmersionslinse aus einem Material mit einer Brechzahl n1, umfassend: eine von einem Medium der Brechzahl n2 trennende Nutzgrenzfläche (26), eine optische Achse (Ax), einen virtuellen Objektbrennpunkt (A) eines durch die Nutzgrenzfläche in die Linke einfallenden konvergierenden optischen Strahls, wobei dieser virtuelle Objektbrennpunkt mit einem reellen Bildbrennpunkt (A') konjugiert ist,
**dadurch gekennzeichnet, dass** die Nutzgrenzfläche (26) definiert wird durch die Bleichung

$$\sqrt{x^2 + y^2} - n\sqrt{(x-a)^2 + y^2} = L \text{, in der:}$$

x, y die Koordinaten eines Punkts (I) der Nutzgrenzfläche (26) in einem kartesischen Koordinatensystem (A, x, y) repräsentieren, mit dem virtuellen Objektbrennpunkt (A) als Nullpunkt und der optischen Achse (Ax) als Abszissenachse,
a die algebraische Distanz ist zwischen dem virtuellen Objektbrennpunkt (A) und seiner Konjugierten (A'), wobei diese Distanz nicht-null ist,
n das Verhältnis aus Brechzahl n1 und Brechzahl n2 ist,
und **dadurch**, dass die Nutzgrenzfläche (26) glatt ist und die Konjugierte (A') sich für den optischen Strahl hinter der Grenzfläche (26) befindet.

2. Festkörperimmersionslinse nach Anspruch 1, **dadurch gekennzeichnet, dass** sie eine andere, zur Nutzgrenzfläche (26) entgegengesetzte Grenzfläche (27) umfasst, wobei diese andere Grenzfläche im Wesentlichen eben ist.

3. Festkörperimmersionslinse nach Anspruch 2, **dadurch gekennzeichnet, dass** die Konjugierte (A') des virtuellen Brennpunkts (A) sich auf Höhe der anderen Grenzfläche (27) befindet.

4. Festkörperimmersionslinse nach einem der Ansprüche 1 bis 3, **dadurch gekennzeichnet, dass** sie einen angefasten Rand (28) umfasst, der sich erweitert, indem er sich der Grenzfläche (26) nähert.

5. Festkörperimmersionslinse nach einem der Ansprüche 1 bis 4, **dadurch gekennzeichnet, dass** - wenn ihre Nutzgrenzfläche durch einen optischen Strahl mit einer maximalen transversalen Abmessung bestrahlt wird - die algebraische Distanz (a) zwischen dem virtuellen Objektbrennpunkt (A) und seiner Konjugierten (A') im Wesentlichen gleich der maximalen transversalen Abmessung des die Nutzgrenzfläche bestrahlenden optischen Strahls (26) ist.

6. Festkörperimmersionslinse nach einem der Ansprüche 1 bis 5 mit einer maximalen transversalen Abmessung, **dadurch** gekenntzeichnet, dass die algebraische Distanz zwischen dem virtuellen Brennpunkt (A) und seiner Konjugierten (A') im Wesentlichen gleich seiner maximalen transversalen Abmessung ist.

7. Festkörperimmersionslinse nach einem der Ansprüche 1 bis 6, **dadurch gekennzeichnet, dass** das sie bildende Material Diamant oder das Glas LaSF35 ist.

8. Optischer Kopf (20), **dadurch gekennzeichnet, dass** er eine Fokussierobjektiv (21) umfasst, das mit einer optischen Immersionslinse (22) nach einem der Ansprüche 1 bis 7 kooperiert, wobei die Grenzfläche (26) der Festkörperimmersionslinse sich auf der Seite des Fokussierobjektivs (21) befindet.

9. Optische Vorrichtung (100), **dadurch gekennzeichnet, dass** sie einen optischen Kopf (20) nach Anspruch 8 umfasst.

10. Optische Vorrichtung (100) nach Anspruch 9, **dadurch gekennzeichnet, dass** sie eine Vorrichtung des Typs Auslesung und/oder Einspeicherung und/oder Reproduktion bzw. Wiedergabe optischer Informationen, Mikroskop, Lithographiegerät ist

FIG. 1A

FIG. 1B

FIG. 2

# FIG. 3

# FIG. 4A

**FIG. 4B**

**FIG. 4C**

Ouverture numérique effective globale pour n=2.09 LaSF35

**FIG. 5A**

ouverture numérique effective globale pour n=2.4619 Diamant

**FIG. 5B**

FIG. 6A

FIG. 6B

FIG. 6C

FIG. 6D

FIG. 6F

FIG. 6G

FIG. 6E

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0241309 A1
- US 6633439 B1

- US 5125750 A